(19) 

Europäisches
Patentamt
European
Patent Office
Office européen
des brevets

(11) **EP 3 173 881 A1**

(12) **EUROPEAN PATENT APPLICATION**

(43) Date of publication:
**31.05.2017 Bulletin 2017/22**

(51) Int Cl.:
*G05B 13/04* (2006.01)  *G05B 17/02* (2006.01)

(21) Application number: **16196922.5**

(22) Date of filing: **02.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.11.2015 JP 2015234200**

(71) Applicant: **OMRON CORPORATION**
**Kyoto, Kyoto 600-8530 (JP)**

(72) Inventors:
• **FUJII, Takashi**
  **Kyoto, Kyoto 600-8530 (JP)**
• **NAMIE, Masaki**
  **Kyoto, Kyoto 600-8530 (JP)**

(74) Representative: **Horn Kleimann Waitzhofer**
**Patentanwälte PartG mbB**
**Ganghoferstrasse 29a**
**80339 München (DE)**

(54) **CONTROL PARAMETER TUNING DEVICE, CONTROL PARAMETER TUNING METHOD, CONTROL PARAMETER TUNING PROGRAM**

(57)    A control parameter tuning device for tuning a control parameter stored in a control system that controls a controlled object on the basis of a control parameter, includes a model updating module configured to update a controlled-object model that represents the controlled object when tuning a control parameter using data acquired when the controlled object operates; a first search module configured to repeatedly run simulations using the updated controlled-object model to search for a control parameter within a first range, and output a candidate for an optimal value for the control parameter; and a second search module configured to repeatedly operate the controlled object and search for a control parameter within a second range narrower than the first range and determined by the candidate output by the first search module and acquire operation results for the controlled object.

FIG. 1

Printed by Jouve, 75001 PARIS (FR)

EP 3 173 881 A1

**Description**

FIELD

To present invention relates to a control parameter tuning device and control parameter tuning method available in a control device for tuning control parameters belonging to a control device, and a control parameter tuning program used in implementing the control parameter tuning method.

BACKGROUND

A control device controls an object based on control parameters. The control parameters for such a control device can be adjusted through a configuration where the control device actually controls a controlled object, and using experience and know how, an operator adjusts the control parameters in various ways to thereby determine optimal values through trial and error. This trial and error, in other words, means discovering the optimal value for a control value by varying the types of control parameters and the values entered, obtaining the change in the controlled value output by the controlled object in response to the operational input provided by the control device at that time, comparing the controlled value to a target controlled value and repeating these processes.

However, with this technique of optimization via actual control of the controlled object, there are cases where it takes several hours until the controlled value can be obtained from the controlled object (e.g., a furnace); in those cases optimizing the control parameters necessitates significant effort and tuning costs.

As a consequence, another technique is to run simulations using a model of the controlled object, instead of actually controlling the object to acquire the controlled values (for example, as in Japanese Patent Application Publication No. 2004-38428, published 05 February 2004). In this way, the controlled values can be obtained in a short time, and therefore, the control parameters can be tuned in a shorter amount of time even when obtaining the controlled values is time intensive.

Further, the simulation may be used to not only obtain controlled values, but to also select the most optimal propagation functions used to express the controlled object (i.e., to select an optimum model); the propagation functions may be used to optimize the simulation as a means of searching for control parameters (optimal values) that satisfy an evaluation criteria (for example, as in Japanese Patent Application Publication No. 2010-266967, published 25 November 2010).

In Patent Document 1: Japanese Patent Application Publication No.2004-38428, the control parameters are tuned through trial and error even if the controlled values are obtained using simulation, and therefore requires the user to have experience and know how. In contrast, in Patent Document 2: Japanese Patent Application Publication No.2010-266967, a tuning device executes steps of selecting the control parameters that must be adjusted, optimizes those values and therefore makes it possible for a user having no experience or know how to tune the control parameters.

Technical Problem

However, existing techniques, such as those described in Japanese Patent Application Publication No.2010-266967 that optimize the control parameters on the basis of only simulation are not capable of removing any model errors regardless of how optimized the model (propagation function) is made through simulation and so the tuning results contain the model errors.

With this problem in mind the present invention aims to provide a control parameter tuning device capable of utilizing the advantages to optimizing control parameters through simulation, which allows a user with no experience or know how to tune control parameters, and further excludes problematic model errors to thereby provide higher precision control parameter tuning.

SUMMARY

To address the above mentioned problems, embodiments of the invention provide for a control parameter tuning device for tuning a control parameter stored in a control system that controls a controlled object on the basis of a control parameter, the control parameter tuning device including: a model updating module configured to update a controlled-object model that represents the controlled object when tuning a control parameter using data acquired when the controlled object operates; a first search module configured to repeatedly run simulations using the updated controlled-object model to search for a control parameter within a first range, and output a candidate for an optimal value for the control parameter; and a second search module configured to repeatedly search for a control parameter within a second range narrower than the first range and determined by the candidate output by the first search module and acquire operation results for the controlled object.

In the above configuration, a first search module repeatedly runs simulations using a controlled-object model to search for a control parameter within a first range, and output a candidate for an optimal value for the control parameter. For a user with no experience or know how, tuning using a real machine, i.e., by actually operating the controlled object becomes an incredibly difficult process without any understanding of what type or sequence in which the control parameters must be adjusted. Despite that, the control parameters can be tuned to a certain extent even without understanding the types or sequence in which the control parameters are to be adjusted by first tuning the control parameters through simulations using the controlled-object model in the above-described manner.

However, tuning through simulation inevitably includes model errors, and thus includes a shift from the optimal values caused by the model errors. Therefore in the above configuration a second search module repeatedly operates the controlled object and searches for a control parameter within a second range narrower than the first range and determined by the candidate output by the first search module, and acquires the operation results. Here the tuning performed by the second search module makes use of the real machine; despite that, no increased processing time is required because the first search module has already sufficiently refined the range of control parameters that must be searched, a further search only needs to be performed on an area wide enough to cover the model errors. Additionally, the type, and the like, of the control parameters that must be adjusted is already determined; therefore, even if for example the user decides to examine the control parameters using the second search module, the necessary operation results can be easily obtained by merely changing the value of the control parameters within a narrow range near the candidate values.

The operation results of the controlled object acquired by the second search module represents a controlled value resulting from the operation of the controlled object in accordance with a manipulated value provided to the controlled object through the control parameters (i.e., the controlled values output by the controlled object); therefore, it is possible to discover optimal values for the control parameter by evaluating the offset between the manipulated values provided to the controlled object and the controlled values resulting from operation of the controlled object.

Additionally, in the above configuration, the model updating module minimizes the model errors in the controlled-object model, because the model updating module uses the data collected while operating the controlled object to update the controlled-object model when tuning the control parameters. As a result, the second search module can refine the optimal value candidates for the control parameters output by the first search module toward the optimal values for the control parameters because the search range used by the second search module is a more exact range, thereby reducing the processing time and the like.

Hereby, it is possible to utilize the advantages to optimizing control parameters through simulation, and allow a user with no experience or know how to tune control parameters, and further remove problematic model errors to thereby provide more highly accurate control parameter tuning.

In the control parameter tuning device according to another embodiment of the invention, the controlled object is provided with a servo motor; the control system includes a servo driver for the servo motor, the servo driver possesses an auto-tuning function; and the model updating module causes the servo driver to perform auto-tuning to thereby acquire data during operation of the controlled object, and updates a characteristic parameter in the controlled-object model on the basis of the data acquired during the operation.

Hereby, the controlled-object model may be easily updated by using the auto-tuning function provided in a servo driver.

In the control parameter tuning device according to another embodiment of the invention, the controlled object is provided with a servo motor; the control system includes a servo driver for the servo motor; and the model updating module repeatedly runs simulations using a servo motor model which is a model of the servo motor and a controlled object model created on the basis of design information for the controlled object and optimizes a characteristic parameter in the controlled-object model on the basis of the simulation results and the data acquired when operating the controlled object with an initial value for the control parameter.

This configuration allows the machine model to be updated even in cases where auto-tuning by the servo driver cannot be used, such as with structures connecting a plurality of axes such as a gantry mechanism or a traveling platform.

The control parameter tuning device according to another embodiment of the invention may include a display control module configured to present simulation results acquired from the first search module on a display device to obtain evaluation thereof from a user.

Hereby the simulation results acquired by the first search module are presented on a display unit allowing for evaluation by a user, and the user is able to verify the state of the control parameter tuning on the basis of the content shown.

Embodiments of the invention provided for a control parameter tuning method for tuning a control parameter stored in a control system that controls a controlled object on the basis of a control parameter, the control parameter tuning method with steps including: updating a controlled-object model that represents the controlled object when tuning a control parameter using data acquired when the controlled object operates; performing a first search by repeatedly running simulations using the controlled-object model updated in the model updating step to search for a control parameter within a first range, and output a candidate for an optimal value for the control parameter; and performing a second search by repeatedly operating the controlled object and searching for a control parameter within a second range narrower than the first range and determined by the candidate output by the first search step, and acquiring operation results from the controlled object. According to embodiments of the invention, a control parameter tuning program implements the control parameter tuning method according to the embodiments on a computer. Finally, a computer readable recording medium storing this kind of control parameter tuning program according to embodiments of the invention falls within the scope of the invention.

Embodiments of the present invention provide a control parameter tuning device capable of utilizing the advantages to optimizing control parameters through simulation, which allows a user with no experience or know how to tune control parameters, and excluding problematic model errors, to thereby provide higher precision control parameter tuning.

BRIEF DESCRIPTION OF THE DRAWINGS

FIG. 1 is a block diagram illustrating an example configuration of a control parameter tuning system including a control parameter tuning device according to a first embodiment;
FIG. 2 is a block diagram illustrating a configuration where a simulation tuning module within the above-mentioned control parameter tuning device adjusting the control parameters using simulation;
FIG. 3 is a block diagram illustrating a configuration where real-machine tuning module within the above-mentioned control parameter tuning device actually operating a machine in a control system and adjusting the control parameters using simulation;
FIG. 4 is a block diagram illustrating a process of adjusting control parameters within the above-mentioned control parameter tuning device;
FIG. 5 is a flowchart detailing the process in S1 in FIG. 4;
FIG. 6 is a flowchart detailing the process in S2 in FIG. 4;
FIG. 7 is a flowchart detailing the process in S3 in FIG. 4;
FIGS. 8A to 8C illustrate examples of operation results shown on a monitor by the operation results display module in the control parameter tuning device;
FIG. 9 is a block diagram illustrating an example configuration of a control parameter tuning system including a control parameter tuning device according to a second embodiment;
FIG. 10 is a block diagram illustrating a configuration where a model updating module in the above control parameters tuning device operates a machine, acquires data while the machine is operating, and updates the machine model through simulation using the data; and
FIG. 11 is a flowchart illustrating the process of the model updating module in the control parameter tuning device updating a machine model.

DETAILED DESCRIPTION

First Embodiment

Embodiments of the present invention are described below in detail, and with reference to the drawings. The same or corresponding elements within the drawings are given the same reference numerals and the explanations therefor are repeated.

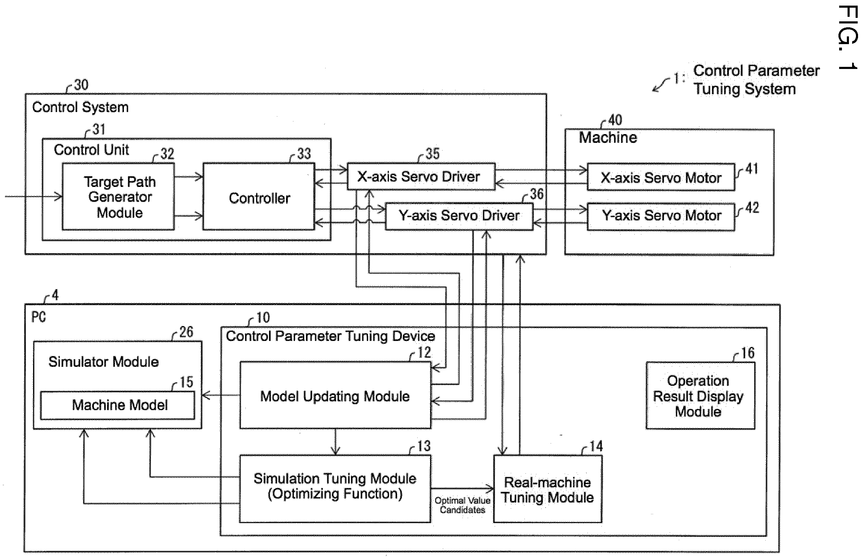

FIG. 1 is a block diagram illustrating an example configuration of a control parameter tuning system 1 including a control parameter tuning device 10 according to an embodiment.

As illustrated in FIG. 1, the control parameter tuning system 1 includes a control parameter tuning device 10, a control system 30 with control parameters to be adjusted, and a machine 40 (controlled object) controlled by said control system 30.

The machine 40 is, for example, a manufacturing device equipped with an X-Y table, an X-axis servo motor 41 and a Y-axis servo motor 42.

The control system 30 controls the machine 40 in accordance with stored control parameters, and is provided with a control unit 31, and x-axis servo driver 35, and a Y-axis servo driver 36. The control unit 31, the X-axis servo driver 35, and the Y-axis servo driver 36 the X-axis servo driver 35 each equipped with an EEPROM (registered trademark) considered by non-volatile memory (not shown), and stores the control parameters in said non-volatile memory.

At the control unit 31, the X-axis servo driver 35, and the Y-axis servo driver 36 are connected via a communication interface (not shown). Similarly, the X-axis servo driver 35 and the X-axis servo motor 41 in the machine 40, as well as the Y-axis servo driver 36 and the Y-axis servo motor 42 in the machine 40 are also connected via a communication interface (not shown).

The control unit 31 is provided with a central processing unit (CPU), read-only memory (ROM), and random access memory (RAM), whereby the CPU executes a program stored in the ROM and RAM to construct a target path generator module 32 and the controller 33.

When operation information for execution by the machine 40 is entered, the target path generator module 32 generates a trajectory pattern for a target path in accordance with stored control parameters such as a speed pattern, and outputs the trajectory pattern to the controller 33. The trajectory patterns for the target path are generated for the X-axis servo motor 41 and the Y-axis servo motor 42 respectively.

When the trajectory pattern for the target path is entered from the target path generator module 32, the controller 33 transmits command values to the X-axis servo driver 35 and the Y-axis servo driver 36 for moving the machine 40 in accordance with the trajectory pattern according to the control parameters such as a stored speed feed forward gain.

On receiving the command value from the controller 33, the X-axis servo driver 35 controls the X-axis servo motor 41 in accordance with control parameters such as a stored position loop gain. Similarly, on receiving the command value from the controller 33, the Y-axis servo driver 36 controls the Y-axis servo motor 42 in accordance with control parameters such as a stored position loop gain.

The control parameter tuning device 10 may be configured by, for instance, a CPU in a portable computer (PC 4) executing a program stored in ROM or RAM. The CPU may run a program stored in ROM or RAM to construct a simulator module 26. Although not illustrated, the PC 4 may be provided with a monitor, keyboard, mouse, and communication interface, for example; the communication interface provided in the PC 4 may serve to connect the control parameter tuning device 10 to the control system 30.

The control parameter tuning device 10 is equipped with a model updating module 12, a simulation tuning module 13 (first search module), a real-machine tuning module 14 (second search module), and an operation results display module 16.

The model updating module 12 updates the machine model 15 (controlled object model) used by the simulation tuning module 13 (later described) to optimize the control parameters in the control system 30. The machine model 15 is created to represent the machine 40 using known modeling methods; in the embodiment, the machine model is stored in the simulator module 26. When adjusting the control parameters, the model updating module 12 operates the machine 40, obtains operation data while machine 40 is operating and uses the operation data to update the machine model 15.

In the embodiment, the model updating module 12 obtains the data from the operation of the machine 40 by using the auto-tuning functions included in the X-axis servo driver 35 and the Y-axis servo driver 36. The auto-tuning function involves a servo driver estimating in real-time the load inertia of moving a real machine, automatically setting a gain commensurate with that estimation result and causing the machine to operate.

The model updating module 12 causes both the X-axis servo driver 35 and the Y-axis servo driver 36 to auto-tune and thereby acquires load inertia from the X-axis servo motor 41 and the Y-axis servo motor 42. The inertia ratios of the X-axis servo driver 35 and the Y-axis servo motor 42 may thus be obtained from the load inertias acquired for the X-axis servo motor 41 and the Y-axis servo motor 42. A total inertia for the X-axis and a total inertia for the Y-axis, which are machine characteristic parameters in the machine model 15 (characteristic parameters) can be calculated from the inertia ratios obtained for the X-axis servo driver 35 and the Y-axis servo driver 36 respectively.

The relationship between the machine model and the inertia ratio of a servo driver is now described. A machine model for a single inertial system is expressed in the following Formula (1), and this machine model is identical for the X-axis and the Y-axis.

Machine model (Single inertial system):

$$\text{Rotational Acceleration of Servo motor (Output)} = 1 \, / \, \text{Total Inertia} \times \text{Torque}$$
$$\text{(Input)} \, (1)$$

The machine characteristic parameter in this model is the total inertia. The total inertia is a total of the rotor inertia and the load inertia on the servo motor. Given that the load inertia of a servo motor is already known, the load inertia is the unknown parameter.

In contrast, the parameter for the servo driver is the inertia ratio, defined as follows by Formula 2.

$$\text{Inertia Ratio} = \text{Load Inertia} / \text{Rotor Inertia of Servo motor} \times 100 \quad (2)$$

Accordingly, the total inertia may be expressed as in Formula 3.

$$\text{Total Inertia} = (1 + \text{Inertia ratio} / 100) \times \text{Rotor Inertia of Servo Motor} \quad (3)$$

The machine characteristic parameter, total inertia, for the machine model can be calculated from the inertia ratio estimated by the servo driver using the above Formula 3.

The total inertia for each the X-axis and the Y-axis are included as the machine characteristic parameters in machine model 15 for the machine 40, which is the controlled object.

Note that although the inertia ratio is used in this instance, the calculation is not limited to only the inertia ratio; the machine characteristic parameter in the machine model can be calculated using the information stored by the servo driver. For instance, the machine model may be expanded to also support a multi-inertial system by using the parameter values supplied by the applicable notch filter available in the servo driver.

The simulation tuning module 13 (first search module) causes the simulator module 26 to repeatedly run simulations using an updated machine model 15, and outputs optimal value candidates for the control parameters in the control system 30 on the basis of the simulation results (i.e., optimizing the control parameters). The simulation tuning module 13, which repeatedly changes the values of the control parameter within a wide range, which includes values, at which the machine 40 not actually be operated (i.e., a first range), to discover the optimal value candidates for the control parameter. At the simulation tuning module 13 is provided with a function for optimizing the control parameter, and uses particle swarm optimization (PSO) as an optimization algorithm. In the present embodiment, the simulation tuning module 13 transmits the acquired simulation results and evaluation results the operation results display module 16.

The real-machine tuning module 14 (second search module) repeatedly operates the machine 40 within a narrow range determined by the optimal value candidates of the control parameter extracted by the simulation tuning module 13 (i.e., a second range) and acquires the results of the operation. The narrow range determined by the optimal value candidates means a range restricted to a neighborhood of the optimal value candidates containing the optimal value candidates.

The real-machine tuning module 14 repeatedly operates the machine 40 using the values of the control parameters set in the control system 30 within the narrow range determined by the optimal value candidates, and obtains the results of the operations (e.g., actual position) from the control system 30. In the embodiment, the real-machine tuning module 14 discovers optimal values for the control parameter on the basis of the operation results obtained. The real-machine tuning module 14 is also provided with a function for optimizing the control parameter, and uses particle swarm optimization (PSO) as an optimization algorithm, similarly to the simulation tuning module 13. The control parameters optimized by the real-machine tuning module 14 are transferred to and the value set in the control system 30.

The operation results display module 16 shows the simulation results and the evaluation results receives from the simulation tuning module 13 on a monitor provided to the PC 4 of the user may evaluate the results. An example of the display is described later.

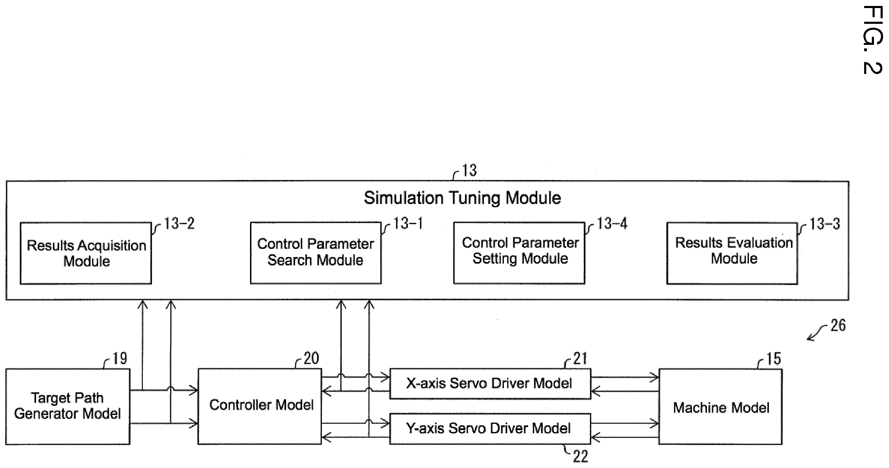

FIG. 2 is a block diagram illustrating a configuration where a simulation tuning module adjusts the control parameter via simulation.

As illustrated in FIG. 2, the simulator module 26 contains a target path generator model 19 which models the target path generator module 32, a controller model 20 which models the controller 33, an X-axis servo driver model 21 which models the X-axis servo driver, a Y-axis servo driver model 22 which models the Y-axis servo driver 36, and a machine model 15.

The simulation tuning module 13 is provided with a control parameter search module 13-1, a control parameter setting module 13-4, a results acquisition module 13-2, and a results evaluation module 13-3. The control parameter search module 13-1 searches within the wide range (i.e., the first range) for, and outputs control parameters therefrom. The control parameter setting module 13-4 sets the control parameters extracted by the control parameter search module 13-1 in the target path generator model 19, the controller model 20, the X-axis servo driver model 21, and the Y-axis servo driver model 22. The control parameter search module 13-1, and the control parameter setting module 13-4 repeat the search and setting of the control parameters until the results evaluation module 13-3 selects the optimal value candidates for the control parameters.

The simulator module 26 runs a stimulation using the target path generator model 19, the X-axis servo driver model 21, the Y-axis servo driver model 22, and the updated machine model 15.

The results acquisition module 13-2 obtains simulation results (i.e., target path; position command; and actual position, speed, and torque) at each simulation; the results evaluation module 13-3 evaluates the simulation results each time results are acquired. The results evaluation module 13-3 determines whether or not the simulation results satisfy an evaluation criteria. The evaluation criteria may be expressed, for instance, as the error between the path during the simulation and a target path. When the error falls below a predetermined reference value (evaluation criteria), the results evaluation module 13-3 selects the value of the control parameter set in the aforementioned simulation as an optimal value candidate for the control parameter.

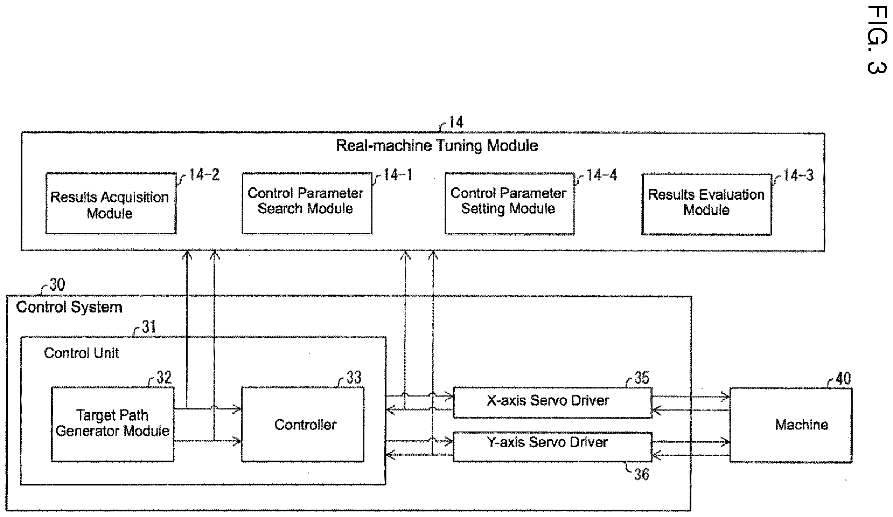

FIG. 3 is a block diagram illustrating a configuration where the machine 40 in the control system 30 is actually operated and the control parameter adjusted.

As illustrated in FIG. 3, the real-machine tuning module 14 is provided with a control parameter search module 14-1, a control parameter setting module 14-4, a results acquisition module 14-2, and a results evaluation module 14-3. To control parameter search module 14-1 searches for and outputs a control parameter within the narrow range that is a neighborhood of and contains the optimal value candidates for the control parameter which were calculated by the simulation tuning module 13 (i.e., the vicinity of the optimal value candidates). The control parameter setting module 14-4 sets the control parameter extracted by the control parameter search module 14-1 in the target path generator module 32, the controller 33, the X-axis servo driver 35, and the Y-axis servo driver 36 in the control system 30.

Once the control parameters in the target path generator module 32, the controller 33, the X-axis servo driver 35, and the Y-axis servo driver 36 are set, the control system 30 controls and operates the machine 40 in accordance with the control parameters set.

The control parameter search module 14-1, and the control parameter setting module 14-4 repeat the search and setting of the control parameters until the results evaluation module 14-3 determines the optimal value for the control parameter.

The results acquisition module 14-2 obtains operation results (i.e., target path; position command; and actual position, speed, and torque) at each Operation of the machine 40; the results evaluation module 14-3 evaluates the operation results each time results are acquired. The results evaluation module 14-3 determines whether or not the operation results satisfy an evaluation criteria. The evaluation criteria may be expressed, for instance, as the error between the path during the actual operation and a target path. When the error falls below a predetermined reference value (evaluation criteria), the results evaluation module 14-3 selects the value of the control parameter set during the aforementioned operation of the machine 40 as an optimal value for the control parameter.

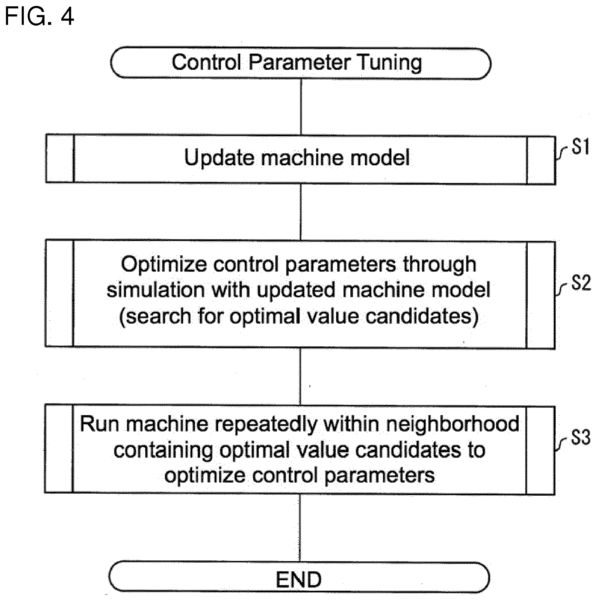

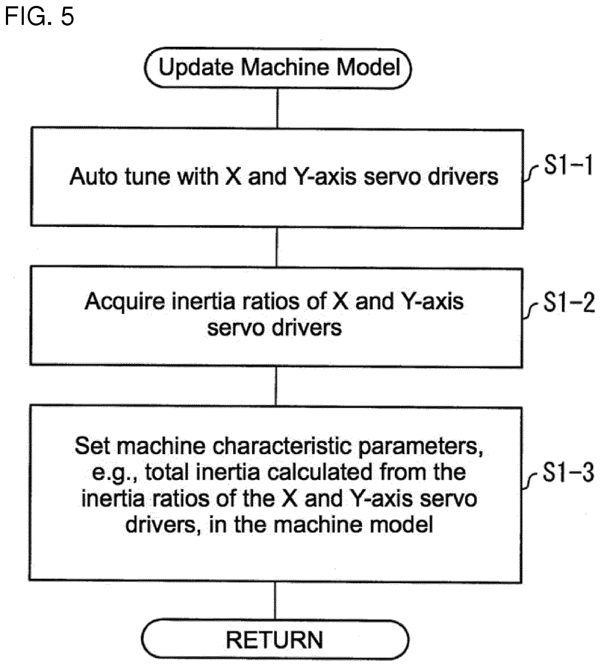

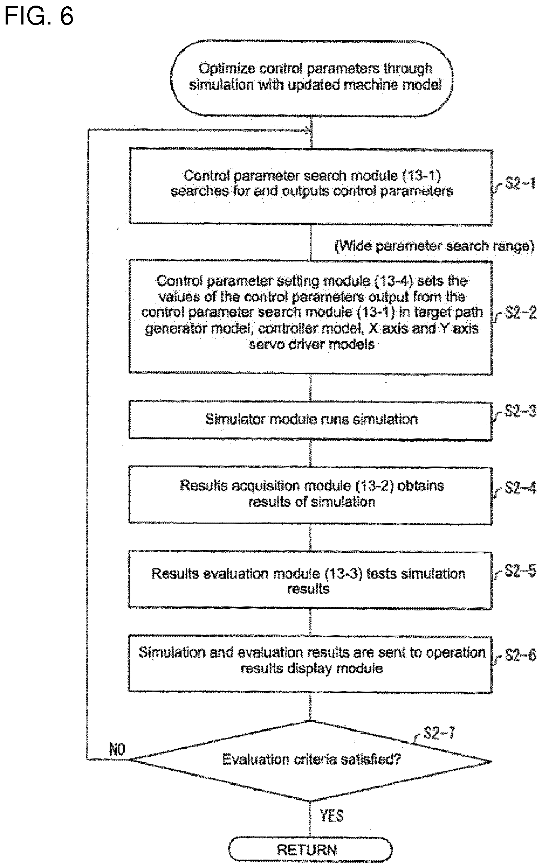

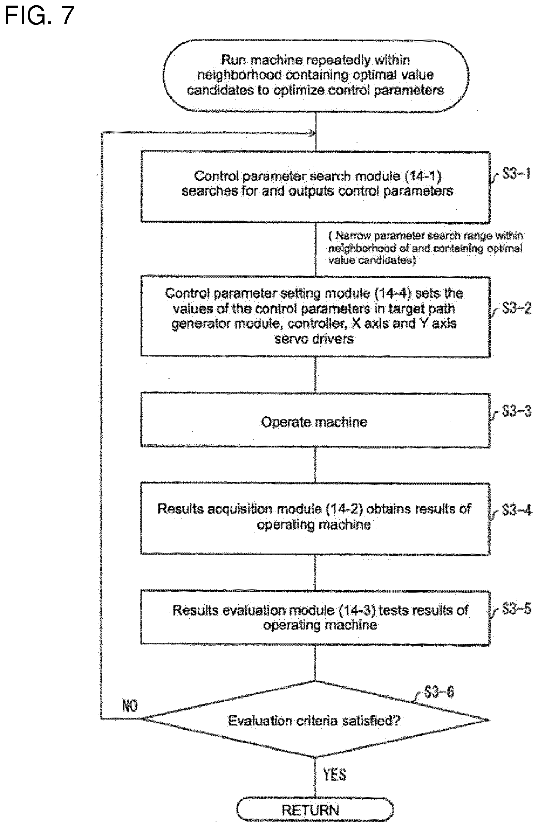

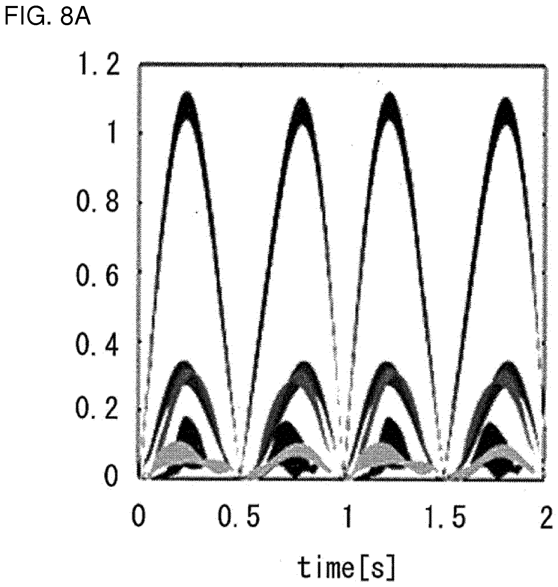

FIG. 4 is a block diagram illustrating a process of adjusting control parameters within the control parameter tuning device 10; FIG. 5 is a flowchart detailing the process in S1 in FIG. 4; FIG. 6 is a flowchart detailing the process in S2 in FIG. 4; FIG. 7 is a flowchart detailing the process in S3 in FIG. 4; FIGS. 8A to 8C illustrate examples of operation results shown on a monitor by the operation results display module 16.

As illustrated in FIG. 4, in Essencel the model updating module 12 updates the machine model 15. More specifically, as illustrated in FIG. 5, first, the model updating module 12 causes the X-axis servo driver 35 and Y-axis servo driver 36 to perform auto tuning (S1-1). Next, the inertia ratio and the like of each the X-axis servo driver 35 and the Y-axis servo driver 36 are calculated (S1-2). The inertia ratio obtained for each the X-axis servo driver 35 and the Y-axis servo driver 36 are used to calculate the respective total inertia (i.e., the missing characteristic parameter), which is then set in the machine model 15. The machine model 15 is thereby updated. Once the updating of the machine model 15 is complete, processing continues S2 in FIG. 4.

In S2 in FIG. 4, the simulation tuning module 13 optimizes the control parameters through simulations using the updated machine model 15. More specifically, as illustrated in FIG. 6, first, the control parameter search module 13-1 searches from within the wide range for, and outputs control parameters therefrom (S2-1). The control parameter setting module 13-4 then sets the control parameters output in the target path generator model 19, the X-axis servo driver model 21, and the Y-axis servo driver model 22 (S2-2).

Once the control parameter is set in each of the models 19, 20, 21, 22 the simulator module 26 runs a simulation using the updated machine model 15 (S2-3).

Once the simulation is complete, the results acquisition module 13-2 obtains the results of the simulation (S2-4), and the results evaluation module 13-3 evaluates the simulation results (S2-5). The results acquisition module 13-2 and the results evaluation module 13-3 transmit the simulation results and the evaluation results obtained to the operation results display module 16 (S2-6). In S2-7 the simulation tuning module 13 returns to processing in S2-1 when the evaluation results from the results evaluation module 13-3 did not satisfy the evaluation criteria. In contrast, when the simulation results satisfy the evaluation criteria, the control parameters satisfying the evaluation criteria is selected as the optimal value candidate and processing continues to S3 in FIG. 4.

In S3 in FIG. 4, the real-machine tuning module 14 operates the machine 40 repeatedly within a narrow range that is a neighborhood of and contains the optimal value candidates of the control parameters obtained in S2 to optimize the control parameters. More specifically, as illustrated in FIG. 7, first, the control parameter search module 14-1 outputs control parameters within the narrow range that is a neighborhood of and contains the optimal value candidates as the search range (S3-1). The control parameter setting module (14-3) then sets the values of the control parameters output in target path generator module 32, the controller 33, the X-axis servo driver 35, and the Y-axis servo driver 36 (S3-2).

The control system 30 controls and operates the machine 40 in accordance with the control parameters set in the target path generator module 32, the controller 33, the X-axis servo driver 35, and the Y-axis servo driver 36 (S3-3). The real-machine tuning module 14 and smooth operation start signal the control unit 31, and the trigger is sent from the simulator module 26 the machine 40.

Once the operation of the machine 40 is complete, the results acquisition module 14-2 obtains the results of the simulation (S3-4), and the results evaluation module 14-3 evaluates the operation results (S3-5). In S3-6 the real-machine tuning module 14 returns to processing in S3-1 when the evaluation results from the results evaluation module 14-3 do not satisfy the evaluation criteria. In contrast, when the evaluation results satisfies the evaluation criteria, the control parameters satisfying the evaluation criteria are selected as being at the optimal value, processing returns to S4 and tuning of the control parameters is complete.

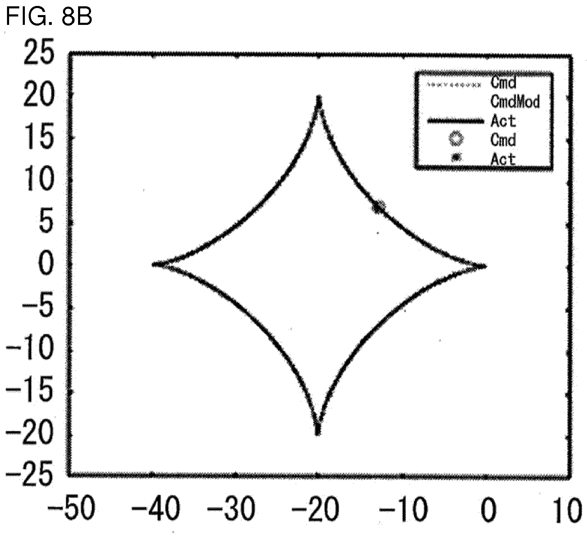

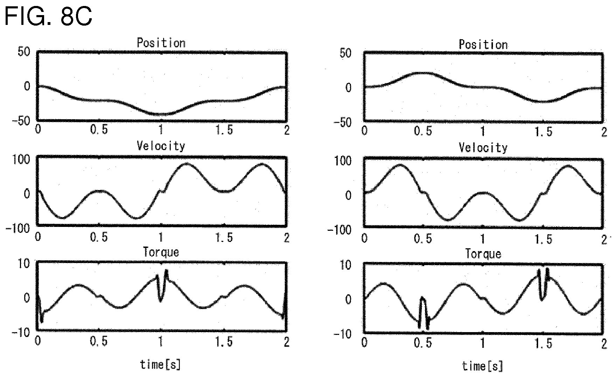

FIGS. 8A to 8C illustrate examples of simulation results and operation results shown by the operation results display module 16. FIG. 8A graphs the error between a target path and the actual operation path obtained which is presented as the operation results for the machine 40. The vertical axis represents the error and the horizontal axis represents the time. FIG. 8B illustrates an example of presenting the position commands (command value) on the X-axis on the Y-axis relative to the actual position (the operation result or the machine 40) as a track. FIG. 8C illustrates an example of presenting the positions on the X-axis and the Y-axis (i.e., the target path, position command, and actual position), the actual speed, and the actual torque (i.e., the operation result of the machine 40 as a time chart. The user may verify the progress and the status of the adjustments from the content displayed.

As above described, in the above control parameter tuning system 1, first a simulation tuning module 13 performs simulations with an updated machine model 16 to output optimal value candidates for control parameters from a wide range (first range) where the machine 40 cannot actually operate.

For a user with no experience or know how, tuning using a real machine, i.e., by actually operating the machine 40 becomes an incredibly difficult process without any understanding of what type or sequence in which the control parameters must be adjusted. Despite that, the control parameters can be tuned to a certain extent even without understanding the types or sequence in which the control parameters are to be adjusted by first tuning the control parameters through simulations using the machine model 15 in the above-described manner.

However, tuning through simulation inevitably includes model errors, and thus includes a shift from the optimal values caused by the model errors.

Therefore, the real-machine tuning module 14 then actually operates the machine 14 within a narrow range (a second range) that is a neighborhood of and contains the optimal value candidates as refined by the simulation tuning module 13. Here the tuning performed by the real-machine module 14 makes use of the machine 40; despite that, no increased processing time is required because the simulation tuning module 13 has already sufficiently refined the range of control parameters that must be searched, a further search only needs to be performed on an area wide enough to cover the model errors. Additionally, the type and the like of the control parameters that must be adjusted is already determined; therefore, even if for example the user decides to examine the control parameters using the real-machine tuning module 14, the necessary operation results can be easily obtained by merely changing the value of the control parameters within a narrow range near the candidate values.

The operation results of the machine 14 obtained by the real-machine tuning module 14 represents the controlled value resulting from the operation of the machine 14 in accordance with a manipulated value provided to the machine 40 through the control parameters (i.e., the controlled values output by the machine 40); therefore, it is possible to discover optimal values for the control parameters by evaluating the offset between the manipulated values provided to the machine 40 and the controlled values resulting from operation of the machine 40.

Additionally, in the above configuration, the model updating module 12 minimizes the model errors in the machine model 15, because the model updating module 12 uses the data collected while operating the machine 40 to update the machine model 15 when tuning the control parameters. As a result, the real-machine tuning module 14 can refine the optimal value candidates for the control parameters output by the simulation tuning module 13 toward the optimal values for the control parameters because the search range used by the real-machine tuning module 14 is a more exact range, thereby reducing the processing time and the like.

Hereby, it is possible to utilize the advantages to optimizing control parameters through simulation, and allow a user with no experience or know how to tune control parameters, and further remove problematic model errors to thereby provide more highly accurate control parameter tuning.

Second Embodiment

Additional embodiments of the present invention are described below in detail, and with reference to the drawings.

For the sake of convenience, components already described in relation to the first embodiment are given the same reference numerals and explanations therefor are not repeated.

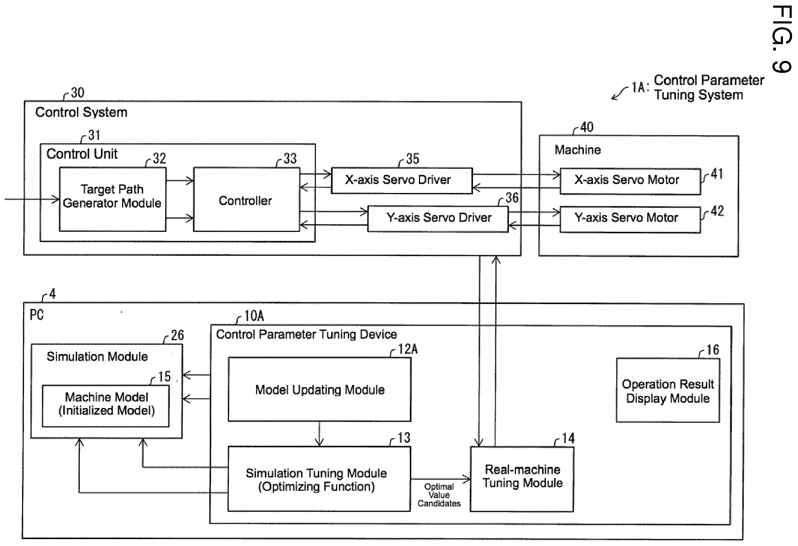

FIG. 9 is a block diagram illustrating an example configuration of a control parameter tuning system 10A including a control parameter tuning device 1A according to an embodiment. As illustrated in FIG. 9, the control parameter tuning system 1A includes a control parameter tuning device 10A, a control system 30, and a machine 40 (controlled object); The control parameter tuning device 10A is providing with a model updating module 12A instead of the model updating module 12.

When adjusting the control parameters, the model updating module 12A operates the machine 40, obtains operation data while the machine 40 is operating and uses the operation data to update the machine model 15, similarly to the model updating module 12. The machine model 15 is stored for instance in the simulator module 26.

One the difference with the model updating module 12, is that the module updating module 12 uses the auto-tuning function in the X-axis servo driver 35 and the Y-axis servo driver 36; in contrast the model updating module 12A uses the simulator module 26 provided in the PC 4 and not the auto-tuning function to update the model the machine model 15.

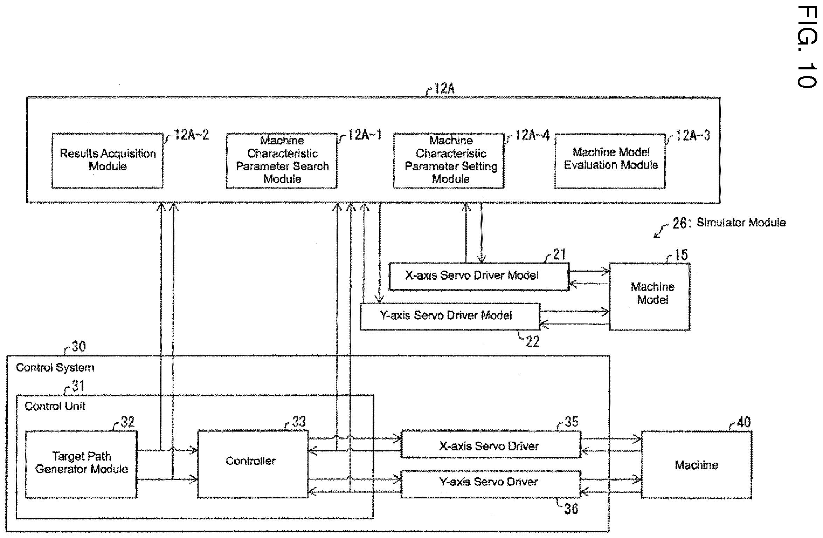

FIG. 10 is a block diagram illustrating a configuration where the model updating module 12A operates the machine 40 and acquires data while the machine is operating, and updates the machine model through simulation using the data.

The simulator module 26 is provided with an initialized machine model created from backup information for the machine 40 using known modeling methods, and stores in advance initial values for the control parameters. The initial values of the control parameters are the values calculated from optimizing the target path generator model 19, the controller model 20, the X-axis servo driver model 21, and the Y-axis servo driver model 22 through simulation.

The model updating module 12A repeatedly operates the machine 14 using the initial values of the control parameters and obtains operation data while the machine 40 is operating, and runs simulations using the models for the X-axis servo driver 35 and the Y-axis servo driver 36 and the aforementioned initialized machine model, and optimizes machine characteristic parameters in the machine model 15 on the basis of the simulation results, and the date the acquired during operation of the machine using the aforementioned initial values. The model updating module 12A is provided with a machine characteristic parameter search module 12A-1, a machine characteristic parameter setting module 12A-4, a results acquisition module 12A-2, and a machine model evaluation module 12A-3.

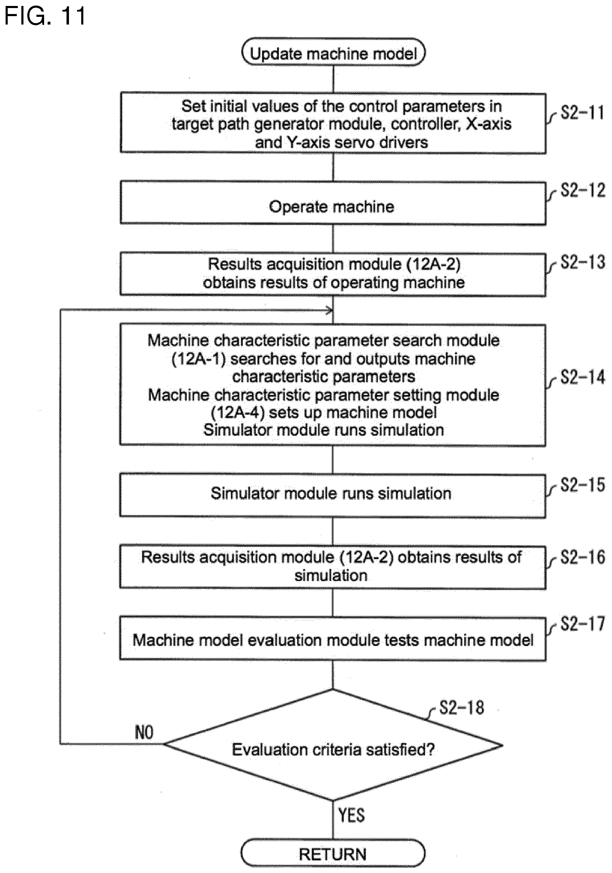

FIG. 11 is a flowchart illustrating the process of the model updating module 12A in the control parameter tuning device 10A updating a machine model 15. The process of updating the machine model 15 is described based on FIG. 11.

First, the model updating module 12A sets the initial values for the stored control parameters in the target path generator module 32, the controller 33, the X-axis servo driver 35, and the Y-axis servo driver 36 (S2-11). The control system 30 operates the machine 40 in accordance with the initial value set for the control parameters (S2-12). The results acquisition module 12A-2 in the model updating module 12A acquires chronological data (i.e., position command; and the actual position, actual speed, and actual torque) when the machine 14's operating to serve as the operation results (S2-13).

Next, processing continues S2-14 where the machine characteristic parameter setting module 12A-4 in the model updating module 12A sets the position command acquired in the X-axis servo driver model 21 and the Y-axis servo driver model 22 in the simulator module 26; the simulator module 26 then runs a simulation using the X-axis servo driver model 21, the Y-axis servo driver model 22, and the machine model (i.e., the initialized model).

The results acquisition module 12A-2 acquires the simulation results (S2-16), and the model the machine model evaluation module 12A-3 evaluates the degree to which the actual position, actual speed, and actual torque calculating through simulation matches the actual position, actual speed and actual torque when the real machine was operated (S2-17). There are many possible evaluation functions. For instance, an error sum of squares is calculated between the actual position when the machine 40 is operating and the actual position calculated through simulation, where a smaller value indicates a greater degree of match of the model.

In S2-18, if the predetermined evaluation criteria is satisfied, the model updating module 12A continues in S2 in FIG. 4; if the evaluation criteria is not satisfied, the model updating module 12A returns to processing in S2-14. Returning to S2-14 the machine characteristic parameter search module 12A-1 searches for and outputs machine characteristic parameters (e.g., inertia, friction coefficient) which are unknown (and may differ between the machine 40 and the machine model 15), and the machine characteristic parameter setting module 12A-4 sets the machine characteristic parameter output by the machine characteristic parameter search module 12A-1. In S2-18, S2-14 to S2-18 are repeated until the evaluation criteria is satisfied. This parameter search algorithm may also use PSO, similarly to when searching for the control parameters.

The above configuration allows updating of the machine model 15 without needing to use the auto-tuning features of the X-axis servo driver 35 and the Y-axis servo driver 36; therefore, for example, the model can still be updated even in cases where auto-tuning cannot be used, such as with structures connecting a plurality of axes such as a gantry mechanism or a traveling platform.

Note that although the above description of embodiments of the invention provides an example of adjusting the control parameters for motion control in the control system 30, the embodiments are not limited to motion control. The controlled object may be device that generates heat, and embodiments of the present invention can be used to tune the control parameters involved in temperature control of the controlled object.

Implementation in Software

The control block in the control parameter tuning device 10 (especially the model updating module 12, the simulation tuning module 13, and the real-machine tuning module 14) may be implemented in hardware as a logic circuit created from integrated circuits (ICs) and the like, or may be implemented in software by using a CPU.

In the latter case, the control parameter tuning device 10 is provided with a CPU that executes program commands which constitute the software implementing each of the relevant functions, a computer or CPU-readable storage device or ROM (hereafter, referred to as a recordable medium) that stores the program and the various data, and RAM into which the above program may be loaded. The computer (or CPU) may then read the program from the recordable medium and execute to program to thereby achieve the aims of the present invention. The recordable medium may be a "non-transitory physical medium", such as a tape, disk, card, semiconductor memory, programmable logic circuit, or the like. The program may also be provided to the computer through any desired transmission medium (such as a communication network, broadcast waves, and the like) capable of transmitting said program. Note that the present invention may also be implemented as a program provided in the form of a data signal encapsulated in a carrier wave and realized through electronic transmission thereof.

The present invention is not limited to each of the above described embodiments, and may be modified in various ways and remain within the scope of the claims. The technical means disclosed in each of the different embodiments may be combined as appropriate, and an embodiment obtained in such a manner remains within the technical scope of the present invention.

**Claims**

1. A control parameter tuning device for tuning a control parameter stored in a control system that controls a controlled object on the basis of a control parameter, the control parameter tuning device comprising:

   a model updating module configured to update a controlled-object model that represents the controlled object when tuning a control parameter using data acquired when the controlled object operates;
   a first search module configured to repeatedly run simulations using the updated controlled-object model to search for a control parameter within a first range, and output a candidate for an optimal value for the control parameter; and
   a second search module configured to repeatedly operate the controlled object and search for a control parameter within a second range narrower than the first range and determined by the candidate output by the first search module and acquire operation results for the controlled object.

2. The control parameter tuning device according to claim 1, wherein: the controlled object is provided with a servo motor; the control system includes a servo driver for the servo motor, the servo driver possesses an auto-tuning function; and the model updating module causes the servo driver to perform auto-tuning to thereby acquire data during operation of the controlled object, and updates a characteristic parameter in the controlled-object model on the basis of the data acquired during the operation.

3. The control parameter tuning device according to claim 1 or 2, wherein: the controlled object is provided with a servo motor; the control system includes a servo driver for the servo motor; and, the model updating module repeatedly runs simulations using a servo motor model which is a model of the servo motor and a controlled object model created on the basis of design information for the controlled object and optimizes a characteristic parameter in the controlled-object model on the basis of the simulation results and the data acquired when operating the controlled object with an initial value for the control parameter.

4. The control parameter tuning device according to any one of claims 1, 2, or 3, further comprising: a display control module configured to present simulation results acquired from the first search module on a display device to obtain evaluation thereof from a user.

5. A control parameter tuning method for tuning a control parameter stored in a control system that controls a controlled object on the basis of a control parameter, the control parameter tuning method with steps comprising:

updating a controlled-object model that represents the controlled object when tuning a control parameter using data acquired when the controlled object operates;

performing a first search by repeatedly running simulations using the controlled-object model updated in the model updating step to search for a control parameter within a first range, and output a candidate for an optimal value for the control parameter; and

performing a second search by repeatedly operating the controlled object and searching for a control parameter within a second range narrower than the first range and determined by the candidate output by the first search step, and acquiring operation results from the controlled object.

6. A control parameter tuning program configured to realize the control parameter tuning method according to claim 5 on a computer.

FIG. 1

1: Control Parameter Tuning System

Machine (40)
- X-axis Servo Motor (41)
- Y-axis Servo Motor (42)

Control System (30)
- Control Unit (31)
  - Target Path Generator Module (32)
  - Controller (33)
- X-axis Servo Driver (35)
- Y-axis Servo Driver (36)

PC (4)
- Control Parameter Tuning Device (10)
  - Model Updating Module (12)
  - Simulation Tuning Module (Optimizing Function) (13)
  - Real-machine Tuning Module (14)
  - Operation Result Display Module (16)
- Simulator Module (26)
  - Machine Model (15)

Optimal Value Candidates

FIG. 2

# FIG. 3

Real-machine Tuning Module 14

- Results Acquisition Module 14-2
- Control Parameter Search Module 14-1
- Control Parameter Setting Module 14-4
- Results Evaluation Module 14-3

Control System 30

Control Unit 31

- Target Path Generator Module 32
- Controller 33
- X-axis Servo Driver 35
- Y-axis Servo Driver 36

Machine 40

FIG. 4

```
┌─────────────────────────────────────────┐
│         Control Parameter Tuning         │
└─────────────────────────────────────────┘
                     │
┌─────────────────────────────────────────┐
│ ‖      Update machine model            ‖ │ ⌐S1
└─────────────────────────────────────────┘
                     │
┌─────────────────────────────────────────┐
│ ‖  Optimize control parameters through ‖ │
│ ‖  simulation with updated machine model‖│ ⌐S2
│ ‖  (search for optimal value candidates)‖│
└─────────────────────────────────────────┘
                     │
┌─────────────────────────────────────────┐
│ ‖ Run machine repeatedly within neighborhood ‖│
│ ‖ containing optimal value candidates to    ‖│ ⌐S3
│ ‖      optimize control parameters         ‖│
└─────────────────────────────────────────┘
                     │
┌─────────────────────────────────────────┐
│                   END                    │
└─────────────────────────────────────────┘
```

FIG. 5

```
          ┌─────────────────────────────┐
          │    Update Machine Model     )
          └─────────────────────────────┘
                         │
    ┌────────────────────────────────────────┐
    │                                        │  ⌐S1-1
    │  Auto tune with X and Y-axis servo drivers │
    │                                        │
    └────────────────────────────────────────┘
                         │
    ┌────────────────────────────────────────┐
    │                                        │  ⌐S1-2
    │    Acquire inertia ratios of X and Y-axis  │
    │              servo drivers             │
    └────────────────────────────────────────┘
                         │
    ┌────────────────────────────────────────┐
    │  Set machine characteristic parameters, │
    │   e.g., total inertia calculated from the │  ⌐S1-3
    │  inertia ratios of the X and Y-axis servo │
    │       drivers, in the machine model    │
    └────────────────────────────────────────┘
                         │
          ┌─────────────────────────────┐
          (          RETURN             )
          └─────────────────────────────┘
```

EP 3 173 881 A1

# FIG. 6

```
      ┌────────────────────────────────────┐
      │  Optimize control parameters through │
      │  simulation with updated machine model│
      └────────────────────────────────────┘
                       │
                       ▼
      ┌────────────────────────────────────┐
      │  Control parameter search module (13-1) │   S2-1
      │  searches for and outputs control parameters│
      └────────────────────────────────────┘
                       │         (Wide parameter search range)
                       ▼
      ┌────────────────────────────────────┐
      │  Control parameter setting module (13-4) sets the │
      │  values of the control parameters output from the │
      │  control parameter search module (13-1) in target path │  S2-2
      │  generator model, controller model, X axis and Y axis │
      │  servo driver models │
      └────────────────────────────────────┘
                       │
                       ▼
      ┌────────────────────────────────────┐
      │  Simulator module runs simulation   │   S2-3
      └────────────────────────────────────┘
                       │
                       ▼
      ┌────────────────────────────────────┐
      │  Results acquisition module (13-2) obtains │  S2-4
      │  results of simulation              │
      └────────────────────────────────────┘
                       │
                       ▼
      ┌────────────────────────────────────┐
      │  Results evaluation module (13-3) tests simulation │  S2-5
      │  results                            │
      └────────────────────────────────────┘
                       │
                       ▼
      ┌────────────────────────────────────┐
      │  Simulation and evaluation results are sent to operation │  S2-6
      │  results display module             │
      └────────────────────────────────────┘
                       │
                       ▼
   NO        ◇ Evaluation criteria satisfied? ◇     S2-7
                       │
                      YES
                       ▼
               ( RETURN )
```

17

## FIG. 7

Run machine repeatedly within neighborhood containing optimal value candidates to optimize control parameters

Control parameter search module (14-1) searches for and outputs control parameters — S3-1

( Narrow parameter search range within neighborhood of and containing optimal value candidates)

Control parameter setting module (14-4) sets the values of the control parameters in target path generator module, controller, X axis and Y axis servo drivers — S3-2

Operate machine — S3-3

Results acquisition module (14-2) obtains results of operating machine — S3-4

Results evaluation module (14-3) tests results of operating machine — S3-5

Evaluation criteria satisfied? — S3-6

NO

YES

RETURN

FIG. 8A

FIG. 8B

FIG. 8C

Position

Velocity

Torque

time[s]

Position

Velocity

Torque

time[s]

FIG. 9

EP 3 173 881 A1

1A: Control Parameter Tuning System

**Control System** — 30

**Control Unit** — 31

Target Path Generator Module — 32

Controller — 33

X-axis Servo Driver — 35

Y-axis Servo Driver — 36

**Machine** — 40

X-axis Servo Motor — 41

Y-axis Servo Motor — 42

**PC** — 4

**Control Parameter Tuning Device** — 10A

Simulation Module — 26

Machine Model (Initialized Model) — 15

Model Updating Module — 12A

Simulation Tuning Module (Optimizing Function) — 13

Optimal Value Candidates

Real-machine Tuning Module — 14

Operation Result Display Module — 16

22

# FIG. 10

26: Simulator Module

12A

- Results Acquisition Module (12A-2)
- Machine Characteristic Parameter Search Module (12A-1)
- Machine Characteristic Parameter Setting Module (12A-4)
- Machine Model Evaluation Module (12A-3)

15: Machine Model

21: X-axis Servo Driver Model
22: Y-axis Servo Driver Model

30: Control System
31: Control Unit
32: Target Path Generator Module
33: Controller
35: X-axis Servo Driver
36: Y-axis Servo Driver

40: Machine

## FIG. 11

( Update machine model )

Set initial values of the control parameters in target path generator module, controller, X-axis and Y-axis servo drivers — S2-11

Operate machine — S2-12

Results acquisition module (12A-2) obtains results of operating machine — S2-13

Machine characteristic parameter search module (12A-1) searches for and outputs machine characteristic parameters
Machine characteristic parameter setting module (12A-4) sets up machine model
Simulator module runs simulation — S2-14

Simulator module runs simulation — S2-15

Results acquisition module (12A-2) obtains results of simulation — S2-16

Machine model evaluation module tests machine model — S2-17

Evaluation criteria satisfied? — S2-18

NO

YES

( RETURN )

Europäisches Patentamt

European Patent Office

Office européen des brevets

# EUROPEAN SEARCH REPORT

Application Number

EP 16 19 6922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 122779 A (MITSUBISHI ELECTRIC CORP) 4 June 2009 (2009-06-04) * abstract * * figures 1,7 * * paragraphs [0018] - [0077] * | 1-6 | INV. G05B13/04 G05B17/02 |
| A | US 2003/028266 A1 (JACQUES ROBERT [US]) 6 February 2003 (2003-02-06) * abstract * * figure 1 * * paragraphs [0028] - [0044] * | 1-6 | |
| A | SHINICHI KOBAYASHI ET AL: "DYNAMIC MODEL BASED AUTO-TUNING DIGITAL SERVO DRIVER", IEEE TRANSACTIONS ON INDUSTRIAL ELECTRONICS, IEEE SERVICE CENTER, PISCATAWAY, NJ, USA, vol. 42, no. 5, 1 October 1995 (1995-10-01), pages 462-465, XP000542372, ISSN: 0278-0046, DOI: 10.1109/41.464608 * abstract * * figure 1 * * sections I-IV * | 1-6 | TECHNICAL FIELDS SEARCHED (IPC) G05B |

The present search report has been drawn up for all claims

| Place of search | Date of completion of the search | Examiner |
|---|---|---|
| The Hague | 13 April 2017 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 6922

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2017

| Patent document cited in search report | | Publication date | Patent family member(s) | | Publication date |
|---|---|---|---|---|---|
| JP 2009122779 | A | 04-06-2009 | JP | 4698656 B2 | 08-06-2011 |
| | | | JP | 2009122779 A | 04-06-2009 |
| US 2003028266 | A1 | 06-02-2003 | US | 2003028266 A1 | 06-02-2003 |
| | | | WO | 03003132 A1 | 09-01-2003 |

EPO FORM P0459

For more details about this annex : see Official Journal of the European Patent Office, No. 12/82

**EP 3 173 881 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004038428 A

- JP 2010266967 A